# EUROPEAN PATENT APPLICATION

(11) **EP 4 760 829 A1**
(43) Date of publication of application: **17.06.2026**
(21) Application number: 24219449.6
(22) Date of filing: 12.12.2024
(51) Int. Cl.: H01M 8/2475, H01M 8/248, H01M 8/12

(54) **SYSTEM FOR ACCOMMODATING ELECTROCHEMICAL CELL STACKS**

(71) Applicant: AVL List GmbH, 8020 Graz (AT); Elcogen Oy, 01510 Vantaa (FI)
(72) Inventor: Kometter, Bernhard, 8111 Judendorf-Straßengel (AT); Feichtinger, Stefan, 8020 Graz (AT); Noponen, Matti, 01510 Vantaa (FI); Vedensola, Valtteri, 01510 Vantaa (FI)
(74) Representative: Gamper, Bettina

(57) **Abstract**

The present invention relates to a system (100) for accommodating electrochemical cell stacks (10A, 10B) comprising a housing (20) and a compression system (30) for applying a compression force on the electrochemical cells in the stacking direction (S). According to the invention, the system (100) comprises internal liners (23) extending through the housing (20) in a stacking direction (S) having open ends to the outside of the housing (20), for separating a gas volume (y) inside the liners (23) from an inner space gas volume (x) of the housing (20); wherein each of the tensioning means (32) of the compression system (30) extends through one of the liners (23).

## Description

The present invention relates to a system for accommodating electrochemical cell stacks, including the arrangement and thermal efficiency of the corresponding electrochemical cell system.

The system according to the invention is applicable in the technical fields of fuel cells or electrolyser cells, in particular large scale stationary systems.

Electrochemical cell stacks are operated at elevated temperatures. Depending on the type of cells, the operation temperature range may vary between 60 °C to 220 °C for common types of fuel cells having a proton exchange membrane (PEM), up to high temperatures around 300 °C to 1000 °C for solid oxide fuel cells (SOFC). It is known to provide a thermally insulated space for the operation of these electrochemical cells for improvement of a fuel cell system efficiency.

In addition, for beneficial design reasons, stacked electrochemical cells are held together and are compressed by threaded connections between stacked cell components. In other known stack designs, stacked cells are externally compressed by compression plates arranged to each end of the stack. Such compression plates are usually tightened together by tensioning means like spigots and threaded nuts extending along an out-side of the stack and through the compression plates. The applied compression is required to maintain many sealed interfaces between the stacked cell components free of leakages from fluid channels, running within the cell stack and passing through all stacked cells for the supply and exhaustion of gases as well as coolant.

In some cases, all the mechanical means required for compressing the stacked electrochemical cells are accommodated in a housing together with the cells and are exposed to the same operating temperatures. For high temperature types of fuel cells like SOFC, it is particularly beneficial, if an exposure of the mechanical means required for compressing the cell stack to the high operation temperatures can be avoided. For this reason, mechanical means for compressing high temperature types of fuel cells are usually arranged outside of a housing. This arrangement, however, requires more space with respect to the outer dimensions of the system.

It is an object of the invention to, at least partially, overcome the described problems in known cell stack designs. It is further an object of the invention to provide a technique that improves a fuel cell stack design with respect to either thermal insulation, thermal efficiency, compactness, a longtime secured integrity of mechanical means for cell stack compression, an accurately maintained compression force and/or a facilitated assembly.

The objects are solved by a system having the features of claim 1. Further features and details of the invention result from the dependent claims, the specification, and the drawing.

The invention proposes a system for accommodating electrochemical cell stacks. The system comprises at least one electrochemical cell stack, a housing, and a compression system. The at least one electrochemical cell stack has a plurality of electrochemical cells stacked in a stacking direction, for energy conversion between chemical energy and electrical energy. The housing surrounds the at least one electrochemical cell stack, for thermally and fluidly separating a gas volume inside and a gas volume out-side the housing. The gas volume outside the housing can be atmospheric or pressurised. The compression system has tensioning means, e.g. spigots, mechanically connected to opposite ends of the at least one electrochemical cell stack, for applying a compression force on the electrochemical cells in the stacking direction.

According to the invention, the system comprises internal liners extending through the housing in the stacking direction having open ends to the outside of the housing, for separating the gas volume inside the internal liners from the inner space gas volume of the housing. Each of the tensioning means extends through one of the internal liners.

Hence, for the first time, the invention provides a compact combination of a housing allowing for mechanical parts of the cell stack compression to extend through an inner space of the housing meant for accommodating the electrochemical cells, and a compression system that is partially arranged within and partially outside of the housing. The combination of these features resides on a spatial separation of the inner space of the housing from open passages for the mechanical components of compression like tensioning means, passing through said inner space. This spatial separation is formed by the internal liners reaching from one end to an opposite end of the housing in a stacking direction of the electrochemical cells.

In the context of this disclosure and in terms of the invention, an electrochemical cell can be either a known type of fuel cell for producing electrical energy from a supply of a hydrogen rich fuel gas and an oxygen rich oxidation gas, or a known type of electrolyser cell for producing a hydrogen rich product gas and an oxygen rich product gas by splitting water under supply of electrical energy.

As a first advantage of the invention, mechanical components under tension like spigots or other tensioning means, are not directly exposed to the high operation temperatures of up to 1000 °C of some types of fuel cells like SOFC, since such components are not directly arranged in an inner space of the housing of a corresponding fuel cell system. This avoidance of high temperatures ensures a longer life cycle, and a more reliable and accurate maintenance of a predetermined compression force onto the cell stack.

As a second advantage, the proposed compression system being partially arranged within and partially outside of the housing has more compact dimensions than a compression system having all the mechanical components arranged outside of the same housing. The inside of the housing usually provides space for system periphery like piping for preheating or recirculation requiring maintenance of the high temperature regime. The possibility of utilizing such peripheral region inside the accommodating space of the housing for the arrangement of the tensioning means extending through said internal liners according to the invention, saves space and enhances compactness of design, compared to a common design having all tensioning means arranged outside of the same housing. This specific arrangement of the tensioning means further enables free medium flow towards the electrochemical cell stacks.

Furthermore, a third advantage is the thermal insulation provided by the spatial separation of the inner space of the housing from the open passages inside the liners for the tensioning means. Compared to a common design of lower temperature type fuel cells where the tensioning means extend through the housing without a spatial separation, the internal liners according to the invention offer an improved thermal insulation between the inside or inner space and the outside of the housing. Thus, a thermal efficiency of any type of an electrochemical cell system is enhanced.

According to an advantageous feature of the invention, a feedthrough element having an inner passage is arranged to at least one open end of the liners and extends through an opening of the housing, for fluidly connecting the open passage inside the at least one of the liners to the outside of the housing. The feedthrough element provides an interface and a flange fastening for fixing the liner and the housing wall together.

According to an advantageous further feature of the invention, the feedthrough element has an outwards protruding flange surface arranged to surround the opening of the housing from one side, and a fixation element having an outwards protruding flange surface is arranged to surround the opening of the housing from the other side, wherein fixation means are arranged in contact with the feedthrough element and the fixation element, for pressing the flange surfaces against both sides of the housing. As a result, a tight clamping contact is provided to avoid thermal leakage at the opening of the housing.

According to an advantageous further feature of the invention, the system comprises a lock element arranged to engage with a counter bearing formed as a groove or surface on the feedthrough element and having at least one of threaded bores and straight bores with nuts assigned to threaded bolts forming the fixation means directed towards the fixation element, for bringing free ends of the threaded bolts in a pressing contact against the fixation element. In this way, the surfaces of the feedthrough element and the fixation element are firmly pressed on the housing to avoid thermal leakage.

According to an advantageous further feature of the invention, the lock element is split in two parts, a first part formed in a U-shape comprising at least one of the threaded bores and straight bores with nuts arranged to engage with the counter bearing, and a second part formed in a O-shape to secure the engaged first part around the feedthrough element. This feature provides an easy assembling due to the form fitting engagement.

According to an advantageous further feature of the invention, the system comprises at least one sealing formed to surround the opening of the housing and arranged between at least one of the flange surfaces and the housing. The sealing additionally prevents thermal leakage.

According to an advantageous further feature of the invention, the liners can comprise at least one compensator element having a variable axial length, for compensating different thermal expansions among the liner and the housing, another compensator element having a sliding interface against internal liner for compensating different thermal expansions among the liner and the housing, and the internal liner and the housing being manufactured from materials having thermal expansion coefficient difference less than 10⁻⁶ / K in the operation temperature range. The compensation of mechanical tensions in the housing structure induced by different thermal expansions, enhances the integrity and tightness of all components and fittings, and helps to avoid potential thermal leakages around the opening in the housing.

According to an advantageous further feature of the invention, the at least one electrochemical cell stack includes a pair of substantially symmetrically arranged electrochemical cell stacks, wherein a piping for gas supply is arranged in the middle in between the pair of electrochemical cell stacks, and the stacks are electrically isolated from the gas supply arrangement. This so-called boxer design of stack arrangement allows for a thermally beneficial arrangement of preheated gas supply from an inner region of the housing in the sense of a hot box to the respective cell stacks. Hence such accommodation of cell stacks enhances the overall thermal efficiency.

According to an advantageous further feature of the invention, the at least one electrochemical cell stack is a solid oxide fuel cell stack operating in at least one of a fuel cell and electrolysis mode at temperatures above 300 °C. Due to its high temperature difference between the inside and the outside of the housing, this type of fuel cell particularly benefits from technical advantages and thermal efficiency of the invention.

According to an advantageous further feature of the invention, the housing comprises a thermally insulating layer arranged outside of the housing. The insulating layer additionally prevents thermal leakage via the housing surface.

According to an advantageous further feature of the invention, the compression system comprises transfer elements arranged to the opposite ends of the at least one electrochemical cell stack, each transfer element having an inwards protruding central compression section in a central position of a cell plane of the electrochemical cell stack, for transferring tensioning forces of the tensioning means into a centrally exerted compression force on the at least one electrochemical cell stack. This mechanical set up of compression system ensures an even distribution of compression force across the cell plane of the stacked cells and all sealings in between, perpendicular to the stacking direction. Especially if the tensioning means are not exactly equally tightened, the compression system disconnects tilting moments between different tensioning forces and the centrally exerted compression force. This reduces the probability of leaks resulting from unbalanced load on the sealings.

The invention further relates to a method for accommodating at least one electrochemical cell stack in a system, the system having a compression system with tensioning means mechanically connected to opposite ends of the at least one electrochemical cell stack, for applying a compression force on the electrochemical cells in the stacking direction. The method comprises the steps of providing a housing surrounding the at least one electrochemical cell stack, for thermally and fluidly separating an inside and an outside of the housing. According to the invention the method provides, for each of the tensioning means, an internal liner extending through the housing in a stacking direction of the at least one electrochemical cell stack, wherein the internal liners having open ends to the outside of the housing, for separating a gas volume inside the liners from an inner space gas volume of the housing, and arranging each of the tensioning means through one of the internal liners, for applying the compression force of the compression system on the at least one electrochemical cell stack.

Further objectives, advantages, features, and applications of the present invention arise from the following description of the exemplary embodiments with reference to the drawings. The drawing shows in:
- Fig. 1: a schematic representation of the system for accommodating a cell stack according to an embodiment of the invention;
- Fig. 2: a cross-section of an assembly of components between and including the housing and the internal liners, according to an embodiment of the invention; and
- Fig. 3: a perspective view on a subset of components contained in Fig. 2 in an assembled arrangement and in a disassembled arrangement.

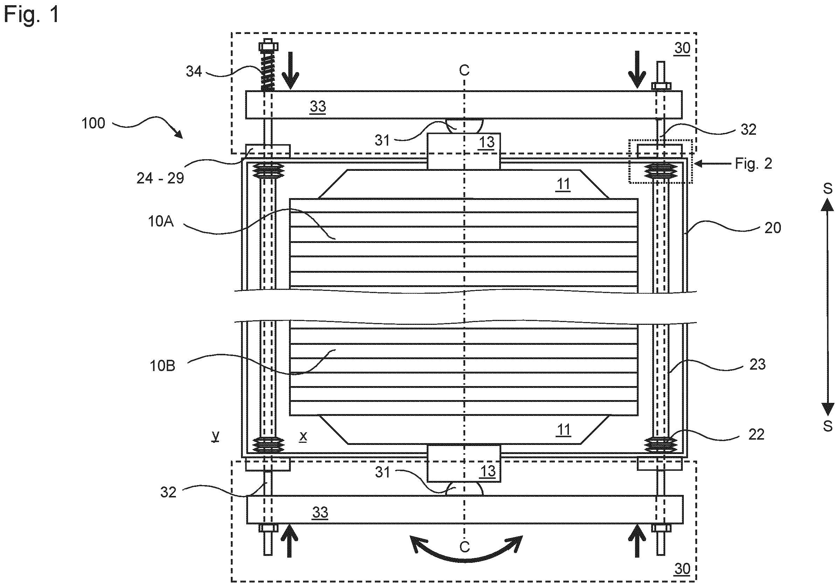

Fig. 1 schematically illustrates a system 100 for accommodating electrochemical cell stacks 10A, 10B for electrochemical conversion between chemical energy and electrical energy. In the present embodiment the electrochemical cells are solid-state fuel cells (SOFC) operated at high temperatures around 1000°C. Furthermore, in the present embodiment two electrochemical cell stacks 10A, 10B are symmetrically arranged from a middle section to an upper side and a lower side along a stacking direction S, wherein a piping for supplying gases for both electrochemical cell stacks 10A, 10B are arranged in said middle section (not depicted). This arrangement of cell stacks is called boxer design, in reminiscence to internal combustion engine design.

The electrochemical cell stacks 10A, 10B are compressed at two opposite sides by the compression system 30. The compression system 30 comprises one or more tensioning means 32 extending along the stacking direction S diametral to a central position C off the electrochemical cell stacks 10A, 10B and two transfer elements 33 extending between the tensioning means 32 on each of the opposite sides of the electrochemical cell stacks 10A, 10B. In other words, the transfer elements 33 are tensioned together in the stacking direction S by the two tensioning means 32 which pass through, or alternatively otherwise engage, at opposite sides of the transfer elements 33 arranged at the upper and lower end sides to the electrochemical cell stacks 10A, 10B. In addition, a coil spring 34 is arranged on one, alternatively on both tensioning means 32 for assisting to set up a predefined compression force from the respective tensioning means 32 on at least one side of the transfer element 33 towards the electrochemical cell stacks 10A, 10B.

In the middle of the transfer elements 33 a central compression section 31 is formed towards one of the ends of the electrochemical cell stacks 10A, 10B. The central compression section 31 transfers the tensioning forces applied by the tensioning means 32 on both sides of the transfer elements 33 into a centrally exerted compression force on the end of the electrochemical cell stacks 10A, 10B. The central compression force results in a sum of the individual tensioning forces. A contact surface of the central compression section 31 partially can have for example a convex spherical shape, i.e. a ball-shape. The central compression sections 31 exert a pressing contact onto respectively assigned receptive elements 13 for receiving the compression force on the stack side. Receptive elements 13 are arranged in the central position C of the electrochemical cell stacks 10A, 10B fixed to an end element 11 arranged on the upper and lower side of the electrochemical cell stacks 10A, 10B.

The convex spherical contact surface on the central compression section 31 and the concave spherical contact surface on the receptive element 13 act like a ball-joint under axial load, meaning that the provided degrees of freedom disconnect any tilting moments that could result from differences in tensioning forces caused by a different tightening among the individual tensioning means 32 and which will not be transmitted by the centrally exerted compression force onto the ends of the electrochemical cell stacks 10A, 10B. As a result, the transmitted compression force is evenly distributed across the cell planes and sealings stacked in between, independent of differences in tightening the tensioning means 32 up to a reasonable extend. For the same reason, it is effective and sufficient to employ only one single coil spring 34 influencing forces on only one side of the transfer elements 33, for assisting the set up and adjustment of the overall compression from the compression system 30 onto the electrochemical cell stacks 10A, 10B.

The electrochemical cell stacks 10A, 10B are arranged in a housing 20 having a thermal insulation layer 43 for thermally insulating an inside of the housing 20 from an outside of the housing to maintain the high operation temperatures of the fuel cells and respective fluid flows requiring to be preheated or recirculated. The housing 20 includes internal liners 23 for insertion of the tensioning means 23, e.g. spigots or threaded bolts of the compression system 30. The internal liners 23 separate an inner space of the housing 20 from an open passage within each of the liners 23 for preventing thermal leakage by the arrangement of tensioning means 23 passing through and reaching to the outside of the housing 20. The internal liners 23 comprise compensator elements 22 having a bellow-like structure providing a variable length, for compensating mechanical tensions caused by differences in thermal expansions between materials or sections of the housing 20 and the respective internal liner 23. In the depicted embodiment of Fig. 1, each side of the internal liners 23 is fitted with a compensator element 22. However, in a simplified modification, one compensator element 22 per internal liner 23 can be sufficient to fulfil the intended functionality. In an alternative embodiment, the compensator elements 22 may have a telescopic structure, for example at least two tube-shaped elements having different perimeters forming a slidable joint for sliding one element into the other element. In more detail to such embodiment of a compensator element 22, a tube-shaped gasket material, e.g. Mica, could be used for sealing a gap between the slidable tube-shaped elements.

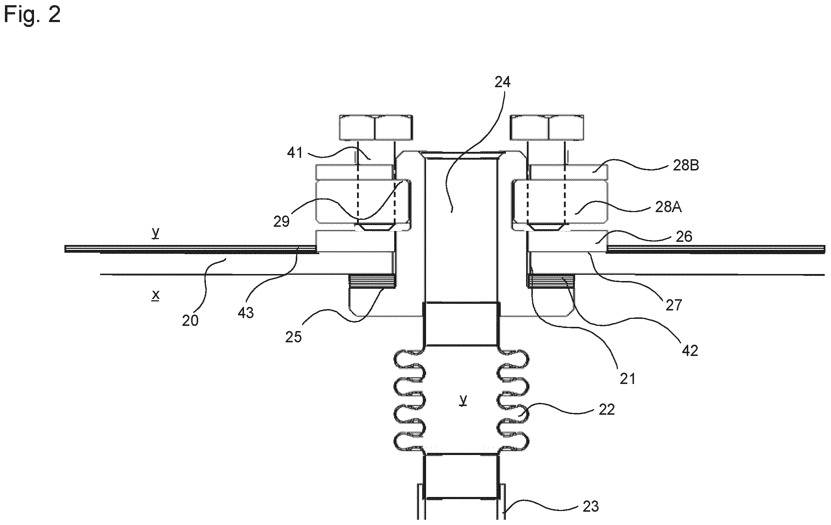

Fig. 2 focusses on an assembly of components arranged at an interface between the closed inner space of the housing 20 and the open passage for insertion of tensioning means 32 formed by one of the internal liners 23.

The housing 20 provides an opening 21, with installation clearance for the feedthrough element 24 to enable the tensioning means 32 to reach into and through an inner accommodating space of the contour of the housing 20 which is defined by the walls of the housing 20. For avoiding impairments in the structure caused by differences in thermal expansion among the individual components and materials, the internal liner 23 is attached to a compensator element 22 having a bellow-like structure, as mentioned before. The compensator element 22 compensates thermally induced mechanical tensions by adapting the axial dimension of the internal liner 23 within the housing 20, i.e. between its interfaces to the housing 20.

The compensator element 22 is connected to a feedthrough element 24 having an internal passage forming an extension to the internal passage of the internal liner 23 passing through the opening 21 of the housing 20. The feedthrough element 24 comprises a flange surface 25 on one end for a clamping and fastening contact with the inner side of the housing 2 around the opening 21. A ring-shaped fixation element 26 pushed onto the feedthrough element 24 from the opposite end has a flange surface 27 for a corresponding clamping and fastening contact with the outer side of the housing 2 around the opening 21. The fixation element 26 is pushed against the outside of the wall of the housing 20 by free ends of axially arranged threaded bolts 41, i.e. screws assigned to threaded bores positioned in a lock element 28A, 28B, which in turn, is engaged and supported by a counter bearing 29 formed by a surface on the upper side of a groove recessed in the perimeter of the feedthrough element 24. Alternatively, said counter bearing 29 can be formed by any other recessed or protruding structure providing a surface for an engagement with the feedthrough element 24 that supports the lock element 28A, 28B including the threaded bolts 51 towards pushing the fixation element 26 against the outside of the housing 20. When tightening the threaded bolts 41, the wall of the housing 20 is clamped between the flange surface 25 of the feedthrough element 24 from the inside and the flange surface 27 of the fixation element 26 from the outside. In this clamping arrangement, a for example ring-shaped sealing 42 is arranged between the inner flange surface 25 and the inside of the wall of the housing 2. Alternatively, or additionally, the sealing 42 can be arranged between the outer flange surface 27 and the outside of the wall of the housing 2.

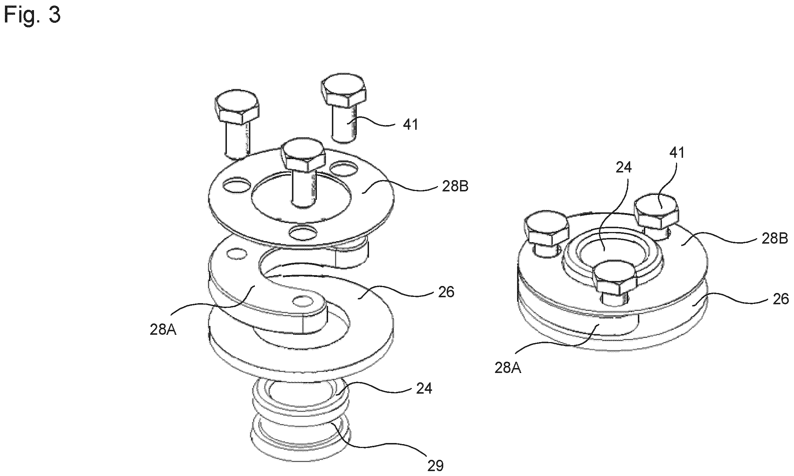

As can be seen in a perspective view of Fig. 3 in a disassembled arrangement depicted on the left-hand side, in this embodiment, the lock element 28A, 28B is comprised of two parts, a U-shaped lock element 28A and an O-shaped lock element. The U-shaped lock element 28A includes the threaded bores assigned for tightening the threaded bolts 41. The O-shaped lock element 28B has through holes assigned to the positions of the threaded bores for accepting the threaded bolts 41. The O-shaped lock element 28B embraces the perimeter of the feedthrough element 24 to hold the U-shaped lock element 28A in position for engagement with the upper surface of the counter bearing groove 29 on the perimeter of the feedthrough element 24. On the right-hand side, an assembled state of the mentioned components arranged on the outside of the housing 20 is depicted.

The foregoing explanations of the embodiments describe the present invention solely by way of examples. Of course, individual features of the embodiments can be freely combined with one another, provided this is technically expedient, without departing from the scope of the present invention.

### List of reference signs

- 10A: electrochemical cell stack
- 10B: electrochemical cell stack
- 11: end element of cell stack
- 20: housing
- 21: opening in housing
- 22: compensator element
- 23: internal liners
- 24: feedthrough element
- 25: flange surface on feedthrough element
- 26: fixation element
- 27: flange surface on fixation element
- 28A: U-shaped lock element
- 28B: O-shaped lock element
- 29: counter bearing groove on fixation element
- 30: compression system
- 31: central compression section
- 32: tensioning means
- 33: transfer element
- 34: compression spring
- 41: threaded bolt
- 42: sealing
- 43: insulating layer
- 100: system for cell stack accommodation

- C: central position
- S: stacking direction
- x: gas volume inside the housing
- y: gas volume outside the housing

## Claims

1. System (100) for accommodating electrochemical cell stacks (10A, 10B), comprising:
at least one electrochemical cell stack (10A, 10B), having a plurality of electrochemical cells stacked in a stacking direction (S), for energy conversion between chemical energy and electrical energy;
a housing (20) surrounding the at least one electrochemical cell stack (10A, 10B), for thermally and fluidly separating a gas volume (x) inside and a gas volume (y) outside the housing (20);
**characterized in that**
the system (100) comprises a compression system (30) having tensioning means (32) mechanically connected to opposite ends of the at least one electrochemical cell stack (10A, 10B), for applying a compression force on the electrochemical cells in the stacking direction (S); and
internal liners (23) extending through the housing (20) in the stacking direction (S) having open ends to the outside of the housing (20), for separating the gas volume (y) inside the internal liners (23) from the inner space gas volume (x) of the housing (20); wherein
each of the tensioning means (32) extends through one of the internal liners (23).

2. System (100) according to claim 1, wherein a feedthrough element (24) having an inner passage is arranged to at least one open end of the liners (23) and extends through an opening (21) of the housing (20), for fluidly connecting the open passage inside the at least one of the liners (23) to the outside of the housing (20).

3. System (100) according to claim 2, wherein the feedthrough element (24) has an outwards protruding flange surface (25) overlapping the housing (20) from one side, and
a fixation element (26) having an outwards protruding flange surface (27) in line with the flange surface (25) on the other side of the housing (20), wherein
fixation means (41) are arranged with the feedthrough element (24) and the fixation element (26), for pressing the flange surfaces (25, 27) against both sides of the housing (20).

4. System (100) according any of the claims 1 to 3, further comprising a lock element (28A, 28B) arranged to engage with a counter bearing (29) formed as a groove or surface on the feedthrough element (24) and having at least one of threaded bores and straight bores with nuts assigned to threaded bolts forming the fixation means (41) directed towards the fixation element (26), for bringing free ends of the threaded bolts in a pressing contact against the fixation element (26).

5. System (100) according to claim 4, wherein the lock element (28A, 28B) is split in two parts, a first part (28A) formed in a U-shape comprising the at least one of threaded bores and straight bores with nuts arranged to engage with the counter bearing (29), and a second part (28B) formed in a O-shape to secure the engaged first part (28A) around the feedthrough element (24).

6. System (100) according to any of the preceding claims, further comprising at least one sealing (42) formed to surround the opening (21) of the housing (20) and arranged between at least one of the flange surfaces (25, 27) and the housing (20).

7. System (100) according to any of the preceding claims, wherein the liners (23) each comprise at least one compensator element (22) having a variable axial length for compensating different thermal expansions among the liner (23) and the housing (20), another compensator element (22) having a sliding interface against internal liner (23) for compensating different thermal expansions among the liner (23) and the housing (20), and the internal liner (23) and the housing (20) being manufactured from materials having thermal expansion coefficient difference less than 10⁻⁶ / K in the operation temperature range.

8. System (100) according to any of the preceding claims, wherein the at least one electrochemical cell stack (10A, 10B) includes a pair of substantially symmetrically arranged electrochemical cell stacks (10A, 10B), wherein a piping for gas supply is arranged in the middle in between the pair of electrochemical cell stacks (10A, 10B) and the stacks are electrically isolated from the gas supply arrangement.

9. System (100) according to any of the preceding claims, wherein the at least one electrochemical cell stack (10A, 10B) is a solid oxide cell stack operating in at least one of a fuel cell and electrolysis mode at above 300 °C temperature.

10. System (100) according to any of the preceding claims, wherein the housing (20) comprises a thermally insulating layer (43) arranged outside of the housing (20).

11. System (100) according to any of the preceding claims, wherein the compression system (30) comprises transfer elements (33) arranged to the opposite ends of the at least one electrochemical cell stack (10A, 10B), each transfer element (33) having an inwards protruding central compression section (31) in a central position (C) of a cell plane of the electrochemical cell stack (10A, 10B), for transferring tensioning forces of the tensioning means (32) into a centrally exerted compression force on the at least one electrochemical cell stack (10A, 10B).

12. Method for accommodating at least one electrochemical cell stack (10A, 10B) in a system (100), the system (100) having
a compression system (30) with tensioning means (32) mechanically connected to opposite ends of the at least one electrochemical cell stack (10A, 10B), for applying a compression force on the electrochemical cells in the stacking direction (S),
the method comprising the steps of:
- providing a housing (20) surrounding the at least one electrochemical cell stack (10A, 10B), for thermally and fluidly separating an inside and an out-side of the housing (20);
**characterized by**
- providing, for each of the tensioning means (32), an internal liner (23) extending through the housing (20) in a stacking direction (S) of the at least one electrochemical cell stack (10A, 10B), wherein the internal liners (23) having open ends to the outside of the housing (20), for separating a gas volume (y) inside the liners (23) from an inner space gas volume (x) of the housing (20), and
- arranging each of the tensioning means (32) through one of the internal liners (23), for applying the compression force of the compression system (30) on the at least one electrochemical cell stack (10A, 10B).
